# EUROPEAN PATENT APPLICATION

(11) **EP 4 242 893 A2**
(43) Date of publication of application: **13.09.2023**
(21) Application number: 23156058.2
(22) Date of filing: 10.02.2023
(51) Int. Cl.: G06F 21/53, G06F 21/74

(54) **CONFIDENTIAL COMPUTING EXTENSIONS FOR HIGHLY SCALABLE ACCELERATORS**

(30) Priority: 10.03.2022 US 202263318779 P; 30.06.2022 US 202217854322
(71) Applicant: INTEL Corporation, Santa Clara, CA 95054 (US)
(72) Inventor: KAKAIYA, Utkarsh Y., El Dorado Hills, CA, 95762 (US); GAYEN, Saurabh, Portland, OR, 97214 (US); SOOD, Kapil, Portland, OR, 97229 (US); LAKKAKULA, Naveen, Chandler, AZ, 85286 (US)
(74) Representative: Samson & Partner Patentanwälte mbB

(57) **Abstract**

Methods and apparatus relating to confidential computing extensions for highly scalable accelerators are described. One or more embodiments provide extensions for scalable accelerator(s) to be able to directly assign accelerator work-queue(s) to Trusted Execution Environment (TEE) Virtual Machines (TVMs). Other embodiments are also disclosed and claimed.

## Description

### RELATED APPLICATION

The present application relates to and claims priority from U.S. Provisional Patent Application, Serial No. 63/318,779, filed March 10, 2022, entitled "CONFIDENTIAL COMPUTING EXTENSIONS FOR HIGHLY SCALABLE ACCELERATORS."

### FIELD

The present disclosure generally relates to the field of processors. More particularly, some embodiments relate to confidential computing extensions for highly scalable accelerators.

### BACKGROUND

Some processors support a Trusted Execution Environment (TEE) to ensure that code and data loaded in a secured TEE compute or storage device is protected for confidentiality and integrity. Generally, "confidentiality" can be provided by memory encryption to protect code and/or data. Moreover, "data integrity" aims to prevent unauthorized entities from altering TEE data when an entity outside the TEE processes data and "code integrity" ensures that any code associated with the TEE is not replaced or modified by unauthorized entities.

### BRIEF DESCRIPTION OF THE DRAWINGS

The detailed description is provided with reference to the accompanying figures. In the figures, the left-most digit(s) of a reference number identifies the figure in which the reference number first appears. The use of the same reference numbers in different figures indicates similar or identical items.
FIG. 1A illustrates a block diagram of a high-level design for a scalable accelerator or an I/O device, which may be utilized in one or more embodiments.
FIG. 1B illustrates a block diagram of some Trusted Execution Environment (TEE) Input/Output (IO) extensions for a scalable accelerator architecture, according to some embodiments.
FIG. 1C illustrates a Work Queue (WQ) state machine according to an embodiment.
FIGs. 2A, 2B 1, and 2B2 illustrate flow diagrams for work descriptor processing, according to some embodiments.
FIG. 2C illustrates a state machine according to one embodiment.
FIG. 3 illustrates embodiments of scalable accelerators, according to some embodiments.
FIGs. 4A and 4B illustrate flows for assigning scalable accelerator WQ(s) to TEE Virtual Machine (TVM), according to some embodiments.
FIG. 5A is a block diagram illustrating both an exemplary in-order pipeline and an exemplary register renaming, out-of-order issue/execution pipeline according to embodiments.
FIG. 5B is a block diagram illustrating both an exemplary embodiment of an in-order architecture core and an exemplary register renaming, out-of-order issue/execution architecture core to be included in a processor according to embodiments.
FIG. 6 illustrates a block diagram of a System On Chip (SOC) package in accordance with an embodiment.
FIG. 7 is a block diagram of a processing system, according to an embodiment.
FIG. 8 is a block diagram of an embodiment of a processor having one or more processor cores, according to some embodiments.
FIG. 9 is a block diagram of a graphics processor, according to an embodiment.

### DETAILED DESCRIPTION

In the following description, numerous specific details are set forth in order to provide a thorough understanding of various embodiments. However, various embodiments may be practiced without the specific details. In other instances, well-known methods, procedures, components, and circuits have not been described in detail so as not to obscure the particular embodiments. Further, various aspects of embodiments may be performed using various means, such as integrated semiconductor circuits ("hardware"), computer-readable instructions organized into one or more programs ("software"), or some combination of hardware and software. For the purposes of this disclosure reference to "logic" shall mean either hardware (such as logic circuitry or more generally circuitry or circuit), software, firmware, or some combination thereof.

Currently, scalable accelerators (such as, Data Streaming Accelerator (DSA), In-Memory Analytics Accelerator (IAA), or QuickAssist Technology Accelerator (QAT)) cannot be assigned to trust domains (such as Intel^{®} Trust Domain Extensions (Intel^{®} TDX) Trust Domains (TDs), e.g., also sometimes referred to as Trusted Execution Environment (TEE) Virtual Machines (TVMs). This can result in accelerator use-case migration/adoption challenges for the confidential computing segment and may also pose significant performance implications. As discussed herein, a "scalable" or "highly scalable" accelerator generally refers to a hardware accelerator to assist in various computing tasks that is readily scalable to support a higher number of operations or software clients as needed. In an embodiment, a highly scalable accelerator includes an interface to receive a plurality of work requests from a plurality of clients/entities and a plurality of compute engines/circuits to perform the plurality of work requests. The work requests may be dispatched to the plurality of compute engines/circuits from a plurality of work queues. The work queues may store a work descriptor per work request. Each work descriptor may include all information needed to perform a corresponding work request.

To this end, some embodiments provide techniques for confidential computing extensions for highly scalable accelerators, such as DSA, IAA, QAT, Graphics Processing Unit (GPU), Field-Programmable Gate Array (FPGA), a processor or Central Processing Unit (CPU), etc. One or more embodiments provide extensions for scalable accelerator(s) to be able to directly assign accelerator work-queue(s) to TVMs. This framework is sometimes referred to herein as trusted execution environment input/output (TEE-IO). No mechanisms currently exist to support TEE-IO on highly scalable accelerators, which support sub-function (work-queue) granular device assignment.

At least one embodiment provides a new TEE-mode of operation for work-queue(s) on scalable accelerator and defines a state machine that enables assigning scalable accelerator work-queue(s) to TVM(s). Further, secure mechanisms are also disclosed for the accelerator to accept and process work descriptors from TVMs and additional capabilities for the admin-command processing.

In some embodiments, the hardware accelerator discussed herein may support one or more data movement and/or one or more data transformation operations. The one or more data movement and/or data transformation operations may include one or more of: a memory move operation, a Cyclic Redundancy Code (CRC) operation, a Data Integrity Field (DIF) operation, a dual-cast operation, a memory fill operation, a memory compare operation, a delta record create or merge operation, a pattern detect operation, a cache flush operation, a scatter-gather operation, a data reduction operation, a memory compression or decompression operation, a scan operation, a filter operation, a select operation, a data compression or decompression operation, one or more cryptographic operations, and one or more public-key exchange operations.

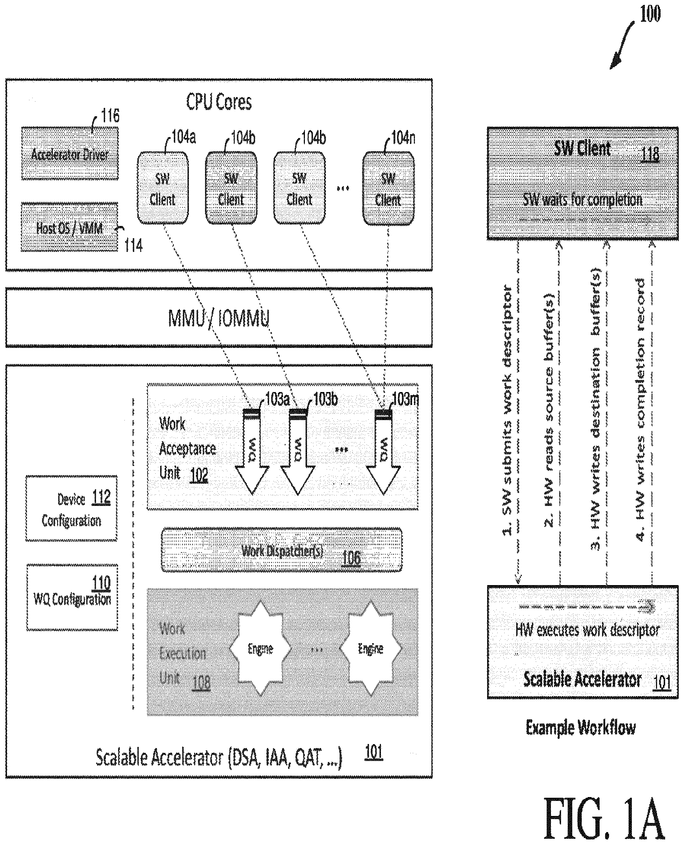

FIG. 1A illustrates a block diagram of a high-level design 100 for a scalable accelerator or an I/O device, which may be utilized in one or more embodiments.

As shown in FIG. 1A, a scalable accelerator 101 may include a Work Acceptance Unit 102 which includes one or more work-queues (WQs) 103a-103m that can be used by clients (such as software (SW) clients 104a-104n) to submit the work to the accelerator 101. A "dedicated" WQ can be assigned to only a single client and the client is responsible for performing flow-control to ensure that the work is not-submitted to an already full queue. By contrast, a "shared" WQ can be assigned to one or more clients (such as shown with reference to WQ 103m), where, for example, the client is expected to use enqueue commands (ENQCMD/S) and/or Deferrable Memory Writes (DMWr) to submit the work to the accelerator 101 and the accelerator hardware provides feedback if the work is accepted or not into a specific queue.

Work dispatcher(s) 106, upon acceptance of the work descriptor into WQs, is responsible for dispatching the work to one or more execution engines or circuits, e.g., in the Work Execution Unit 108. The work dispatcher(s) 106 may use different dispatch techniques such as weighted round-robin, priority-based, Quality of Service (QoS) based, rate-control based, or any combination thereof. Work dispatchers 106 could be Application Specific Integrated Circuit (ASIC) devices or other hardware blocks, micro-engines, programmable units, or micro-controllers running a firmware.

As illustrated, the Work Execution Unit 108 includes one or more processor engines/slices that may be used to execute the work descriptors. Each of these engines may be equipped with similar capabilities or may be equipped with specialized/non-uniform capabilities.

WQ Configuration 110 is a storage device that stores the configuration information for each WQ (103a-103m). Some examples of this information include one or more of: an indication of dedicated WQ or shared WQ, WQ size, WQ Process Address Space Identifier (PASID) (which is unique to a given WQ in an embodiment), WQ transfer/batch limits, WQ supported operations, etc.

Device Configuration 112 is a storage device that stores the configuration information that applies to the overall device or to the resource(s) shared among WQs 103a-103m. Some examples of this information include one or more of: a device Base Address Register (BAR), memory-space enable, bus-master enable, etc.

In some embodiments, system software (e.g., operating system (OS), virtual machine monitor (VMM), such as host OS/VMM 114) creates a Memory Management Unit (MMU) mapping(s) to map WQs into the address-space of one or more software clients, to allow the software clients (e.g., SW clients 104a-104n) to submit work descriptors to the accelerator (101) and also creates an Input-Output MMU (IOMMU) mapping(s) to allow the scalable accelerator 101 to access the address space of one or more software clients (e.g., SW clients 104a-104n). As an example, the software clients (e.g., SW clients 104a-104n) may be an application, a driver, a container, a micro-service, a virtual machine, a machine container, or an application/driver/container/micro-service running inside of virtual-machine/machine-container. In an embodiment, an accelerator driver 116 may configure and support the various operations of the scalable accelerator 101.

In an embodiment, such as illustrated on the right side of FIG. 1A, the workflow would include one or more of the following operations:
(1) Software client 118 creates a work descriptor and invokes the accelerator to process the descriptor (operation 1), e.g., either by writing the descriptor directly into the address associated with the WQ or by writing the descriptor into a ring-buffer and updating the tail pointer associated with the WQ. During this process, the Central Processing Unit (CPU) or processor core would consult a memory management unit to translate virtual address associated with the WQ to a physical address to perform the MMIO write.
(2) Accelerator hardware (HW) (at operation 2) will be notified about the new descriptor or update of the tail pointer, and in the event that descriptor is not provided directly it would issue a Direct Memory Access (DMA) read to read the descriptor from the ring-buffer.
(3) Accelerator hardware will then: (i) validate the descriptor, (ii) issue DMA read(s) to read the source buffer(s), (iii) complete the required processing per the operation specified in the descriptor, and (iv) perform DMA write(s) to write the destination buffer(s) (at operation 3).
(4) At operation 4, the accelerator hardware will generate a completion interrupt, a completion record DMA write, or both to notify the software client about the completion of the work.

In one or more embodiments, all the DMA requests (ring-buffer reads, source-buffer reads, destination-buffer reads/writes, completion-record writes, etc.) issued by the accelerator hardware are tagged with a Requester-ID (and optionally a PASID) and are translated/validated using an IOMMU.

Moreover, Intel Corporation's Trust Domain Extensions (Intel TDX) has introduced new, architectural elements to help deploy hardware-isolated, Virtual Machines (VMs) called Trust Domains (TDs) or TEE virtual machines (TVMs). Intel TDX is designed to isolate VMs from the virtual-machine manager (VMM)/hypervisor and any other non-TD software/entities on the platform. As mentioned before, even though scalable accelerators may be present on a platform, these accelerators cannot currently be assigned to a TVM or access TVM's private memory (as they are not part of TVM's Trusted Computing Base (TCB)). To this end, in one or more embodiments, one or more TDX-IO/TEE-IO extensions are proposed to the scalable accelerator architecture herein to enable direct-assignment of accelerator resources to the TVMs.

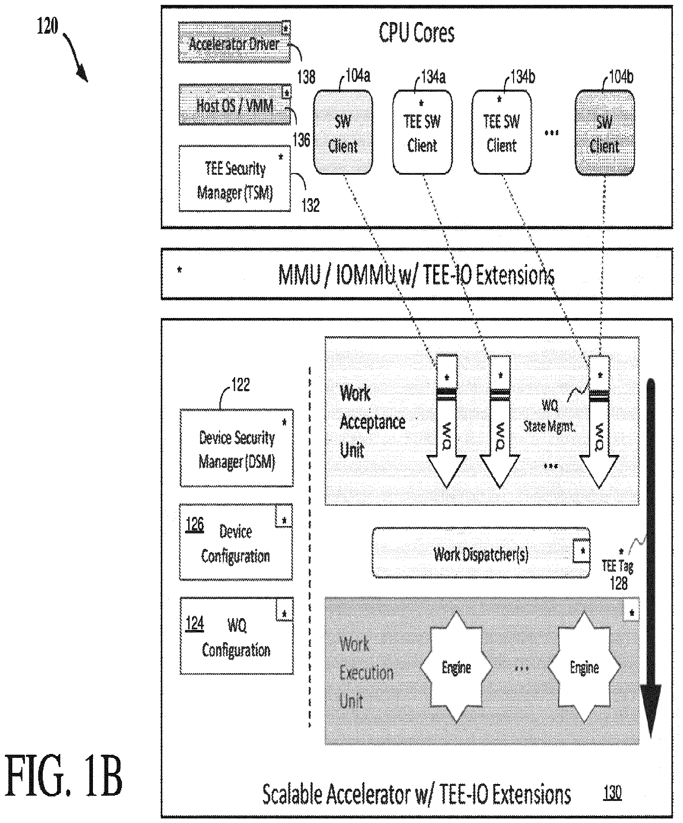

In accordance with some embodiments, one or more of the TEE-IO extensions for scalable accelerators are highlighted (by a denotation "*") in the block diagram of FIG. 1B. More specifically, FIG. 1B illustrates a block diagram of some TEE-IO extensions for a scalable accelerator architecture 120, according to some embodiments.

In one embodiment, the scalable accelerator is a Data Streaming Accelerator (DSA). The DSA may support one or more operations including: a memory move operation, Cyclic Redundancy Code (CRC) operation, a Data Integrity Field (DIF) operation, a dual-cast operation, a memory fill operation, a memory compare operation, a delta record create or merge operation, a pattern detect operation, a cache flush operation, a scatter-gather operation, a data reduction operation, etc.

In another embodiment, the scalable accelerator is an In-Memory Analytics Accelerator (IAA). The IAA may support memory compression and/or decompression. The IAA may also support one or more analytics operations (e.g., a scan operation, a filter operation, a select operation, etc.).

In yet another embodiment, the scalable accelerator is a QuickAssist Technology Accelerator (QAT). The QAT may support data compression or decompression, one or more cryptographic operations, and/or one or more public-key exchange operations (e.g., data compress/decompression operations, data encrypt/decrypt operations, Public Key Encryption (PKE) operations, etc.).

Referring to FIG. 1B, a Device Security Manager (DSM) logic 122: (i) supports authentication of device/resource identities and measurement reporting, (ii) enables configuration for Peripheral Component Interconnect express (PCIe) and/or Compute Express Link (CXL) Integrity and Data Encryption keys (assuming IDE is supported), and/or (iii) enables secure WQ configuration and state management.

A WQ configuration and state management logic/storage 124 provides a new mode for work queues called TEE-mode and defines a state machine for the WQ management. A device configuration logic/storage 126 identifies device configurations that impact security posture of the TVM data and suggest mechanisms to handle updates to them.

A TEE tag 128 is a new tag that is carried throughout the device pipeline (as illustrated by the corresponding arrow in FIG. 1B) to help associate work descriptors (or the operations performed in-context of these work descriptors) with TEE/non-TEE mode. The TEE tag 128 may include a single bit or flag in an embodiment. In turn, some embodiments provide extensions to the work descriptor processing and admin-command processing.

In an embodiment, MMU/MMIO transactions (e.g., work descriptor or command submissions) initiated by Legacy VMs or other untrusted software are tagged with TEE tag of 0 (e.g., a binary 0 or "Ob"), and MMU/MMIO transactions initiated by TVMs are tagged with TEE tag of 1 (e.g., a binary 1 or "1b") - before they arrive at the accelerator 130. Also, while one or more embodiments herein refer to a TEE tag of 0 or 1, embodiments are not limited to this and other representations (including reversing these values) may be utilized in various implementations.

In one embodiment, DMA transactions tagged with TEE tag of 0 are correctly translated to Legacy VM or other untrusted software memory regions, and DMA transactions tagged with TEE of 1 are correctly translated to TVM accessible private/shared memory regions.

In an embodiment, a TEE tag is conveyed via a T-bit in PCIe/CXL IDE Transaction Layer Packet (TLP). In other embodiments, the TEE tag may be conveyed via an IDE_T signal on an Intel On-chip System Fabric - Primary (IOSF-P), a TEE-bit on Intel Ultra Path Interconnect (UPI), a TEE-bit on Intel Ultra Path CXL Interconnect (UXI), a T-bit in OHC-C (Orthogonal Header Content - C) field of a TLP, or a signal internal to a System on Chip (SoC) such as is_tdx.

In one embodiment, a TEE Security Manager (TSM) logic 132: (i) provides/assigns interfaces to the VMM (or another (e.g., untrusted) host entity such as OS, driver, etc.) to assign memory, CPU/core(s), and device interfaces to TVMs, (ii) implements the security mechanisms and access controls (e.g., IOMMU translation tables, etc.) to protect confidentiality and integrity of the TVM data and execution state in the host from entities not in the TCB of the TVM, (iii) manages state of device interface(s) assigned to TVM, and (iv) establishes/manages IDE encryption keys for the host/device, and, if needed, scheduling key refreshes. One or more TEE software clients (e.g., 134a and 134b) could be a TVM, or an application/driver/container/micro-service running inside of TVM. In some embodiments, an assignable interface may include one of: a PCI or CXL physical function, PCIe/CXL Single Root Input/Output Virtualization (SR-IOV) virtual function, or Scalable Input/Output (I/O) Virtualization Assignable Device Interface (Scalable IOV ADI).

In some embodiments, a new mode is introduced for work queues called "TEE-mode." In an embodiment, the accelerator 130 exposes support for TEE-mode via a WQ capability register or field (e.g., stored in WQ configuration storage 124) and allows system software (such as the host OS/VMM 136 and/or accelerator driver 138) to enable/disable TEE-mode using the WQ configuration table register. Sample WQ capability register and WQ configuration table register are shown in the below tables. Both of these registers provide an interface to access WQ configuration storage. With the introduction of TEE-mode, support is provided for assigning one or more dedicated WQs or one or more shared WQ to TVMs.

| WQ Capability Register | | | |
|---|---|---|---|
| Bit | Attribute | Size | Description |
| 56 | RO | 1 bit | **WQ TEE Mode Support** |
| | | | 0: TEE mode is not supported. WQ is configured in a non-TEE mode. |
| | | | 1: TEE mode is supported and can be enabled via WQCFG. |

| WQ Configuration Table | | | | |
|---|---|---|---|---|
| Bytes | Bits | Attribute | Siz e | Description |
| 11:8 | 31 | RSVD | 1 bit | |
| | 30 | RW/L | 1 bit | **WQ TEE Mode Enable** |
| | | | | **0: WQ cannot be assigned or used with TEE.** |
| | | | | **1: WQ can be assigned and used with TEE.** |
| | | | | **If WQ TEE Mode Support is 0, this field is reserved and may be hardwired to 0.** |

In one or more embodiments, system software (e.g., an accelerator driver 138) will set TEE-mode to 0b when assigning a WQ to Legacy VM and will set TEE-mode to 1b to enable WQ assignment to TVM.

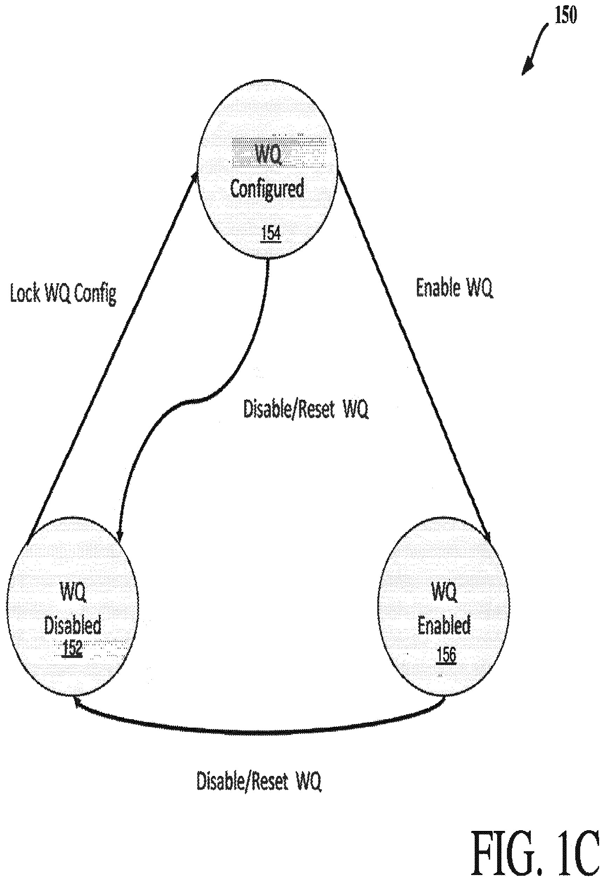

FIG. 1C illustrates a WQ state machine 150, according to an embodiment. TEE-IO framework may utilize TVM to authenticate a device and verify the device's configuration, before allowing the device to receive trusted MMIO transactions from the TVM or to issue DMAs to TVM's private memory (i.e., accepting such data/transactions in the TCB of the TVM). To this end, a WQ management state machine 150 is proposed to support TEE-mode of operation.

More particularly, the WQ management state machine 150 may include one or more of the following states in various embodiments.
(1) WQ Disabled 152: A state where the WQ is not operational. System software is allowed to configure various WQ configuration parameters in this state including the TEE-mode; however, the WQ does not accept any MMIO transactions (e.g., work descriptors), nor will the WQ generate any DMAs. Examples of WQ configuration include dedicated or shared WQ, TEE-mode disabled or enabled, WQ PASID for dedicated WQ, WQ size, WQ priority, WQ block-on-fault enable setting, WQ maximum batch size, WQ maximum transfer size, etc.
(2) WQ Configured 154: A state where the WQ configuration is locked, but the WQ is still not operational. WQ does not accept any MMIO transactions (e.g., work descriptors), nor will the WQ generate any DMAs. This intermediate state enables TVMs to: (i) perform device authentication and attestation to assess the security posture of the accelerator, and/or (ii) procure WQ and other device configuration parameters to validate/vet them before allowing them to be in its TCB. This state may also provide accelerator hardware an ability to perform consistency checks for WQ configurations; for example, ensuring that all WQ configuration parameters are set to non-reserved value and device resources are not oversubscribed.
(3) WQ Enabled 156: A state where the WQ is fully operational, and its configuration is locked. In this state, the WQ accepts new descriptors (as long as there is a space in the WQ and TEE tag is correct) and performs DMAs when executing these accepted descriptors.

In an embodiment, "WQ Enabled" state 156 is the only operational state, independent of whether the WQ is assigned to Legacy VM or TVM. The accelerator may then utilize TEE-mode configuration in the WQ config to determine whether to allow WQ operation with TVM.

In one or more embodiments, the state machine 150 supports one or more of the following state machine commands and events.
(i) Lock WQ Configuration Command: A command that locks WQ configuration for a WQ in "WQ Disabled" state 152 and performs consistency-related checks before transitioning the WQ to "WQ Configured" state 154.
(ii) Enable WQ Command: A command that makes the WQ transition to an operational state.
(iii) Disable WQ Command: A command that causes WQ to stop accepting any descriptors, wait for completion of all descriptors that had been queued to the WQ, and then finally transition the WQ to "WQ Disabled" state 152.
(iv) Reset WQ Command: A command that causes WQ to stop accepting any descriptors, abort all descriptors in the WQs, wait for any operations in flight, and then finally transition the WQ to "WQ Disabled" state. It may also reset all WQ configuration parameters except WQ size to their initial/reset values.

In an embodiment, only "Disable/Reset WQ" commands may require special handling for on-going/pending descriptors and "Lock WQ Configuration or Enable WQ" commands may operate on an empty WQ.

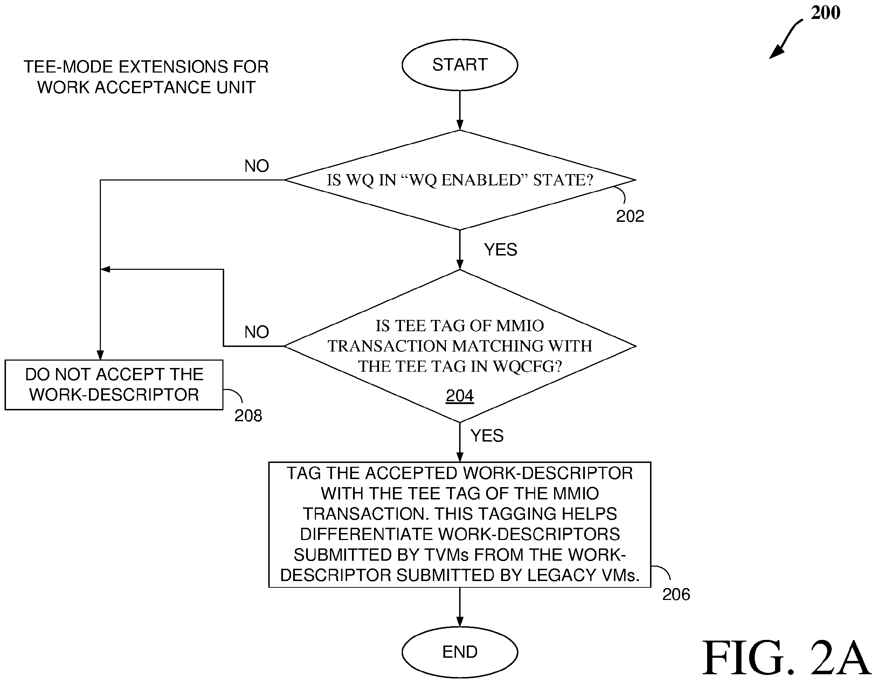

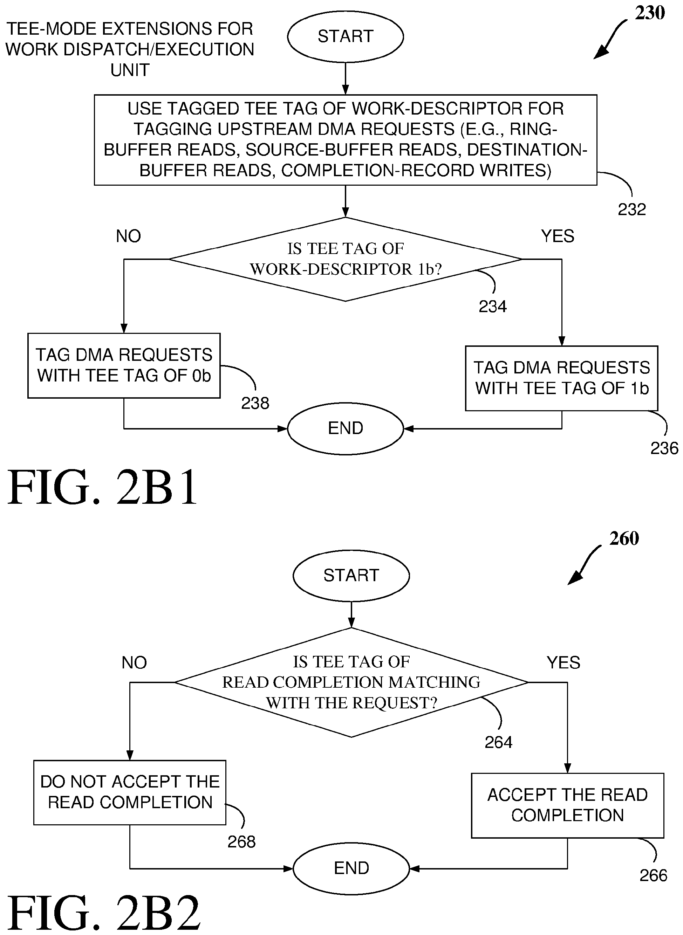

In accordance with some embodiments, the following new extensions to the work descriptor processing are introduced as shown in FIGs. 2A, 2B1, and 2B2. More particularly, FIGs. 2A, 2B1, and 2B2 illustrate flow diagrams of methods 200, 230, and 260, respectively, for work descriptor processing, according to some embodiments.

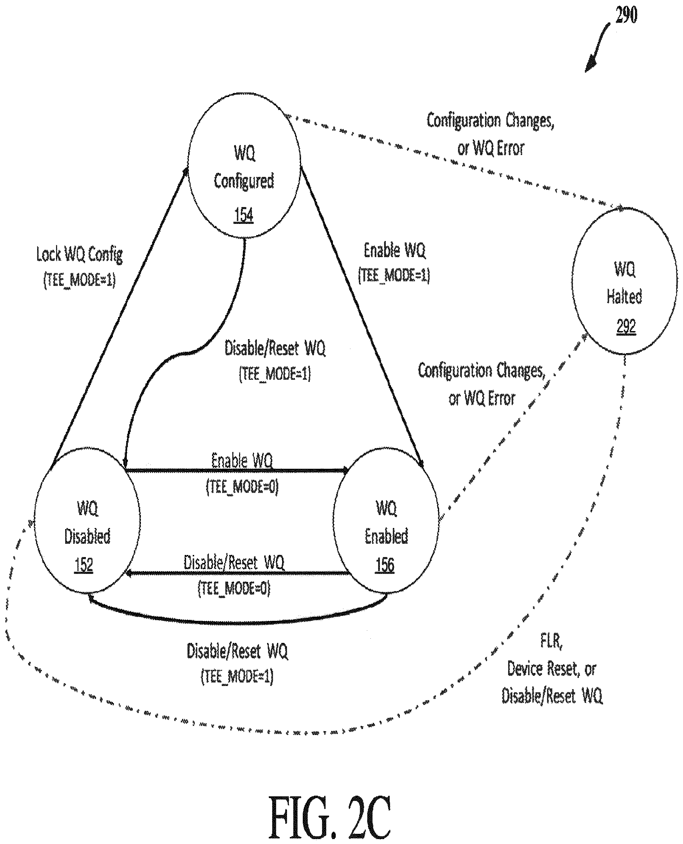

An embodiment provides an optimization to the state machine of FIG. 2C, which enables direct transition from "WQ Disabled" state 152 to "WQ Enabled" state 156 when the TEE-mode is disabled for the WQ.

In at least one embodiment, it may be crucial from a security standpoint that configuration of a WQ assigned to TVM is not modified without TVM's consent once TVM has brought the WQ in its TCB. This security property may be achieved by ensuring that WQ configuration is locked by the accelerator when the WQ is in enabled state. However, there are still some events that may impact the security posture of the WQs assigned to TVMs. For example:
(a) Changes to certain device-level configurations (e.g., BARs, Bus Master Enable, Memory Space Enable), and/or re-configurations of shared resources.
(b) Device/WQ-level errors such as link down/reset event, fabric errors, parity errors or other non-recoverable errors.

Referring to FIG. 2A, at an operation 202, it is determined whether a WQ is in a WQ enable state. At an operation 204, it is determined whether the TEE tag of the corresponding MMIO transaction matches the TEE tag in the WQ's configuration (WQCFG). At an operation 206, the accepted work-descriptor is tagged with the TEE tag of the MMIO transaction. This tagging may differentiate work-descriptors submitted by TVMs from the work-descriptors submitted by legacy VMs. As shown in FIG. 2A, if the determination at operations 202 or 204 is negative, the work-descriptor is rejected at an operation 208.

Referring to FIG. 2B1, at an operation 232, a work-descriptor TEE tag is used for tagging upstream DMA requests (e.g., ring-buffer reads, source-buffer reads, destination-buffer reads/writes, completion-record writes, etc.). At an operation 234, it is determined whether the TEE tag of the work-descriptor is asserted (e.g., 1b). If so, at an operation 236, the DMA request(s) are tagged with the same TEE tag (e.g., 1b). Otherwise, at an operation 238, the DMA request(s) are tagged with an opposite TEE tag (e.g., 0b).

Referring to FIG. 2B2, at an operation 264, it is determined whether the TEE tag of DMA read completion(s) match the original TEE tag of the request(s). If so, at an operation 266, the read completion is accepted. Otherwise, at an operation 268, the read completion is rejected.

FIG. 2C illustrates a state machine 290 according to one embodiment. A new state called "WQ Halted" 292 is entered on the event of configuration changes or WQ error. Once the WQ enters this state, the WQ stops accepting the new work descriptors or executing already submitted work descriptors. A Function-Level Reset (FLR) or Device Reset or Disable/Reset WQ command may be used to return the WQ to "WQ Disabled" state 152.

In an embodiment, only a trusted entity such as a TEE security manager (TSM) 132 running on the host is allowed to transition WQ (with TEE-mode enabled) across these different states. Allowing an untrusted software such as OS/VMM to transition the WQ to enabled state can lead to security attacks and compromises the confidentiality of TVM data. Therefore, at least one embodiment proposes the addition of the TEE tag to admin/control operations as well, and not just the work descriptor submissions. In one embodiment, only TEE commands can operate on a WQ with TEE-mode enabled. As discussed herein, a "trusted entity" generally refers to an entity that includes logic, such as a TEE application, a TEE driver, a TEE operating system, a TEE container, a TEE virtual machine, or a TEE security manager. Also, an "untrusted entity" may include an entity that includes logic, such as an application, a driver, an operating system, a container, a virtual machine, or a virtual machine monitor.

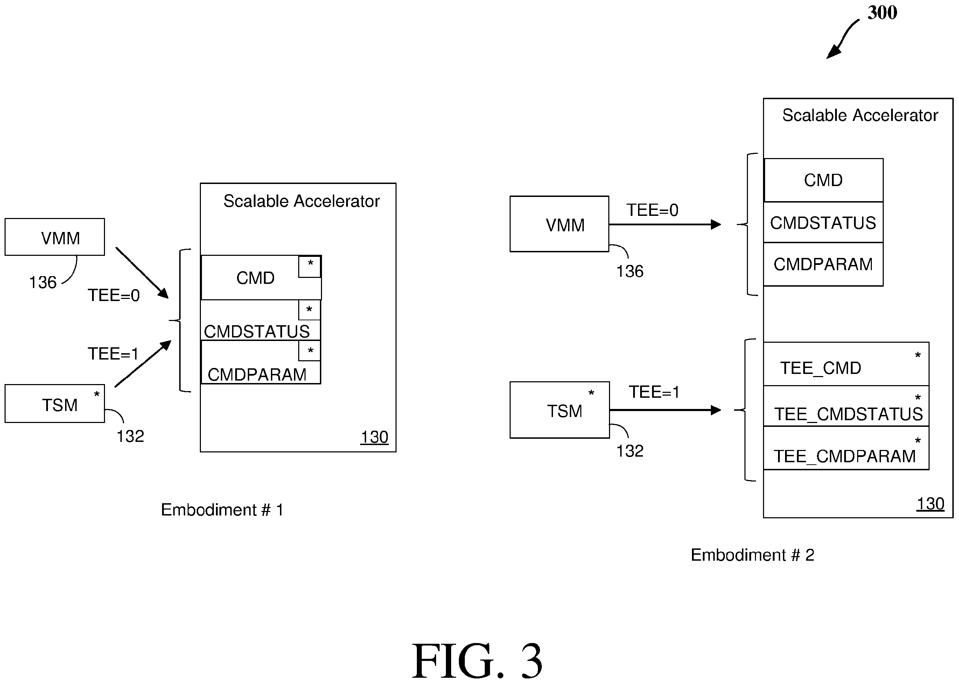

FIG. 3 illustrates two embodiments of scalable accelerators, according to some embodiments. In one embodiment (labeled as embodiment #1 on the left side of FIG. 3), the accelerator 130 compares the TEE tag of the command register access (read/write) with the TEE tag of resource (e.g., WQ) being operated upon. The command is accepted/executed only when the TEE tag of command matches with the TEE tag of the resource; otherwise, the command is dropped or responded with an error.

In a second embodiment (labeled as embodiment #2 on the right side of FIG. 3), a separate set of command registers (e.g., TEE_CMD (TEE command register), TEE_CMDPARAM (TEE command parameter register), and TEE_CMDSTATUS (TEE command status register)) are implemented on an accelerator that are only accessible by TSM 132. Access is restricted by ensuring the TEE tag or Security Attribute of Initiator (SAI) for register access is 1b or SEAM_SAI, respectively.

In yet another embodiment, a secure Security Protocol and Data Model (SPDM) session between TSM 132 and DSM 122 is used to send trusted commands and to receive responses for them from an accelerator.

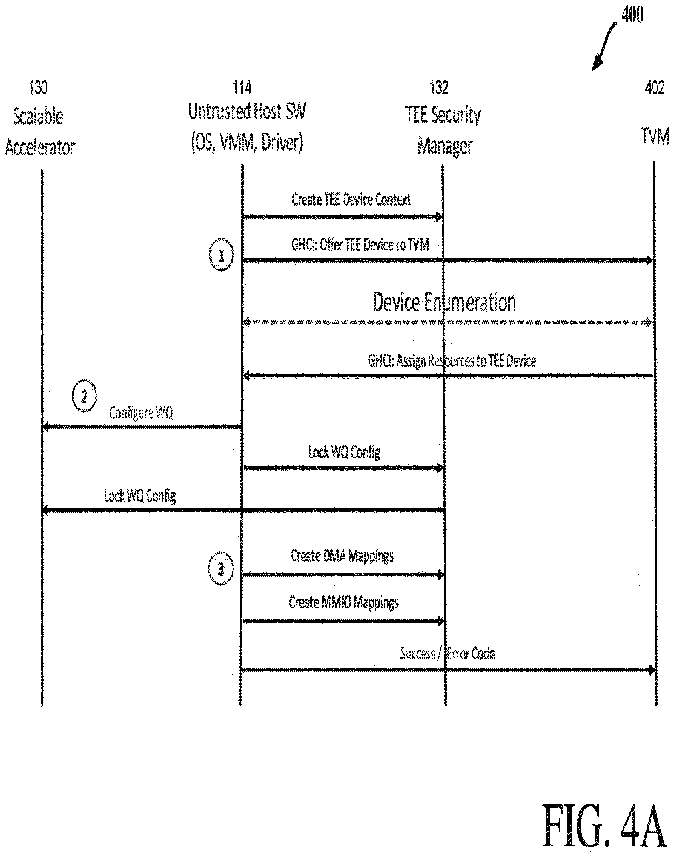

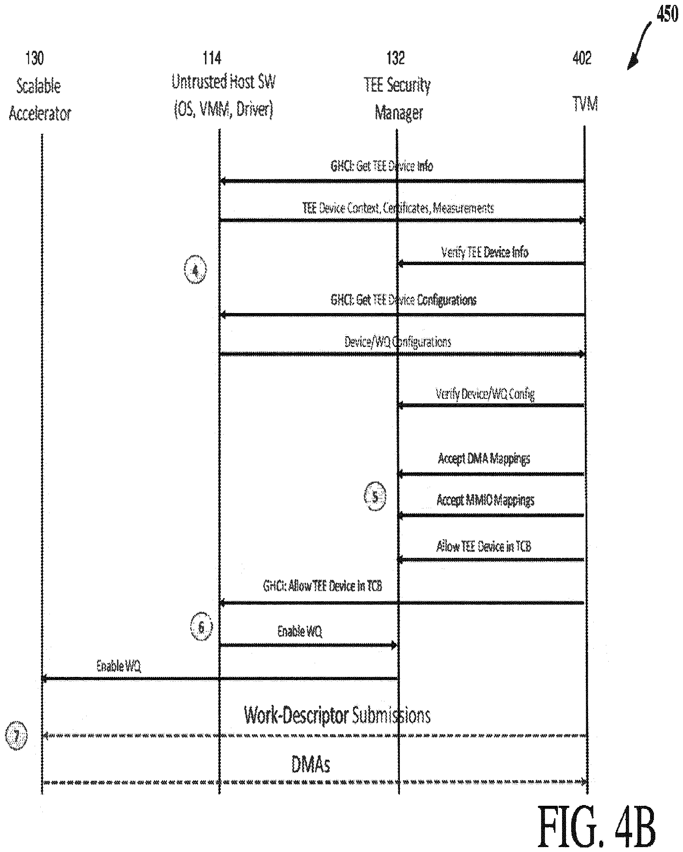

FIGs. 4A and 4B illustrate diagrams of flows 400 and 450 for assigning scalable accelerator WQ(s) to TVM, according to some embodiments.

Referring to FIG. 4A, VMM 114 creates a new TEE device context with TSM 130 to help track the TEE device state. At operation # 1, VMM offers the TEE device to TVM 402 and supports the device enumeration operations invoked by TVM 402. Once the basic device enumeration is completed, TVM 402 requests to assign resources to the TEE device assigned to TVM, e.g., through a Guest-Host Communication Interface (GHCI).

At operation # 2, VMM 114 works with the scalable accelerator 130 (e.g., a driver for the scalable accelerator) to complete the WQ configuration and requests the TSM 132 to move the WQ from the "WQ Disabled" state 152 to the "WQ Configured" state 154. At operation # 3, VMM 114 invokes the TSM 132 to create DMA mappings in IOMMU and MMIO mappings in the MMU.

Referring to FIG. 4B, at operation # 4, TVM 402 requests the TEE device information and TEE device configurations and verifies them, e.g., working closely with the TSM 132. After being satisfied with the TEE device information/configurations, at operation # 5, TVM 402 starts to bring the TEE device into its TCB by accepting IOMMU/MMU mappings and also conveying TVM's approval of device configurations to the TSM 132.

At operation # 6, TVM 402 requests that the VMM 114 (who in turn requests TSM 132) to transition the WQ from the "WQ Configured" state 154 to "WQ Enabled" state 156. At operation # 7, the WQ is fully operational and can receive work descriptors from TVMs and generate DMAs to TVM's memory.

Additionally, some embodiments may be applied in computing systems that include one or more processors (e.g., where the one or more processors may include one or more processor cores), such as those discussed with reference to FIGs. 1 et seq., including for example a desktop computer, a workstation, a computer server, a server blade, or a mobile computing device. The mobile computing device may include a smartphone, tablet, UMPC (Ultra-Mobile Personal Computer), laptop computer, Ultrabook^{™} computing device, wearable devices (such as a smart watch, smart ring, smart bracelet, or smart glasses), etc.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU (Central Processing Unit) including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

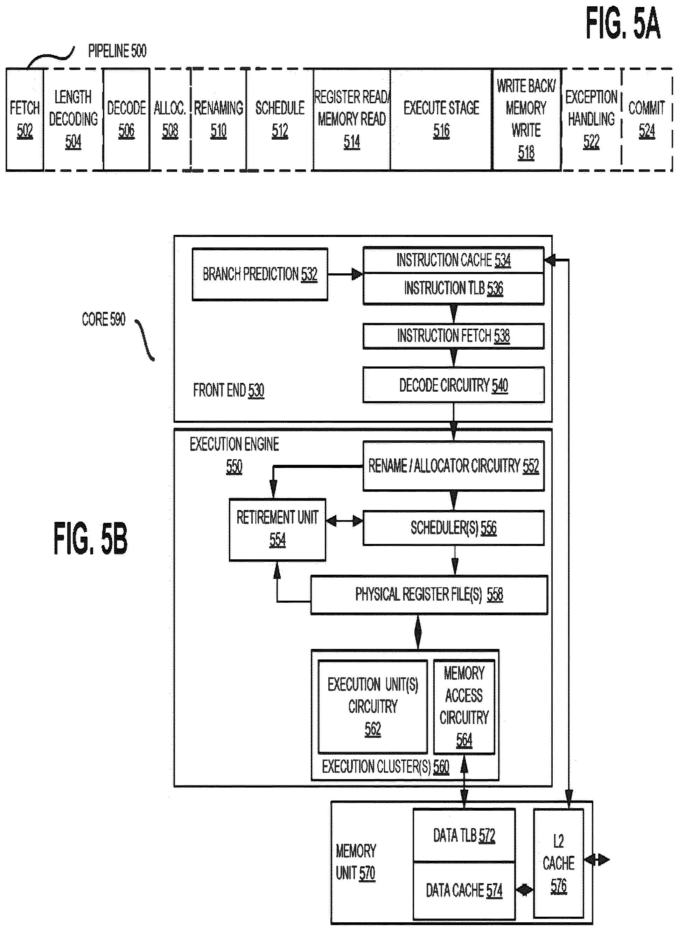

FIG. 5A is a block diagram illustrating both an exemplary in-order pipeline and an exemplary register renaming, out-of-order issue/execution pipeline according to embodiments. FIG. 5B is a block diagram illustrating both an exemplary embodiment of an in-order architecture core and an exemplary register renaming, out-of-order issue/execution architecture core to be included in a processor according to embodiments. The solid lined boxes in FIGS. 5A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 5A, a processor pipeline 500 includes a fetch stage 502, a length decode stage 504, a decode stage 506, an allocation stage 508, a renaming stage 510, a scheduling (also known as a dispatch or issue) stage 512, a register read/memory read stage 514, an execute stage 516, a write back/memory write stage 518, an exception handling stage 522, and a commit stage 524.

FIG. 5B shows processor core 590 including a front end unit 530 coupled to an execution engine unit 550, and both are coupled to a memory unit 570. The core 590 may be a reduced instruction set computing (RISC) core, a complex instruction set computing (CISC) core, a very long instruction word (VLIW) core, or a hybrid or alternative core type. As yet another option, the core 590 may be a special-purpose core, such as, for example, a network or communication core, compression engine, coprocessor core, general purpose computing graphics processing unit (GPGPU) core, graphics core, or the like.

The front end unit 530 includes a branch prediction unit 532 coupled to an instruction cache unit 534, which is coupled to an instruction translation lookaside buffer (TLB) 536, which is coupled to an instruction fetch unit 538, which is coupled to a decode unit 540. The decode unit 540 (or decoder) may decode instructions, and generate as an output one or more micro-operations, micro-code entry points, microinstructions, other instructions, or other control signals, which are decoded from, or which otherwise reflect, or are derived from, the original instructions. The decode unit 540 may be implemented using various different mechanisms. Examples of suitable mechanisms include, but are not limited to, look-up tables, hardware implementations, programmable logic arrays (PLAs), microcode read only memories (ROMs), etc. In one embodiment, the core 590 includes a microcode ROM or other medium that stores microcode for certain macroinstructions (e.g., in decode unit 540 or otherwise within the front end unit 530). The decode unit 540 is coupled to a rename/allocator unit 552 in the execution engine unit 550.

The execution engine unit 550 includes the rename/allocator unit 552 coupled to a retirement unit 554 and a set of one or more scheduler unit(s) 556. The scheduler unit(s) 556 represents any number of different schedulers, including reservations stations, central instruction window, etc. The scheduler unit(s) 556 is coupled to the physical register file(s) unit(s) 558. Each of the physical register file(s) units 558 represents one or more physical register files, different ones of which store one or more different data types, such as scalar integer, scalar floating point, packed integer, packed floating point, vector integer, vector floating point,, status (e.g., an instruction pointer that is the address of the next instruction to be executed), etc. In one embodiment, the physical register file(s) unit 558 comprises a vector registers unit, a writemask registers unit, and a scalar registers unit. These register units may provide architectural vector registers, vector mask registers, and general purpose registers. The physical register file(s) unit(s) 558 is overlapped by the retirement unit 554 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 554 and the physical register file(s) unit(s) 558 are coupled to the execution cluster(s) 560. The execution cluster(s) 560 includes a set of one or more execution units 562 and a set of one or more memory access units 564. The execution units 562 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 556, physical register file(s) unit(s) 558, and execution cluster(s) 560 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 564). It should also be understood that where separate pipelines are used, one or more of these pipelines may be out-of-order issue/execution and the rest in-order.

The set of memory access units 564 is coupled to the memory unit 570, which includes a data TLB unit 572 coupled to a data cache unit 574 coupled to a level 2 (L2) cache unit 576. In one exemplary embodiment, the memory access units 564 may include a load unit, a store address unit, and a store data unit, each of which is coupled to the data TLB unit 572 in the memory unit 570. The instruction cache unit 534 is further coupled to a level 2 (L2) cache unit 576 in the memory unit 570. The L2 cache unit 576 is coupled to one or more other levels of cache and eventually to a main memory.

By way of example, the exemplary register renaming, out-of-order issue/execution core architecture may implement the pipeline 500 as follows: 1) the instruction fetch 538 performs the fetch and length decoding stages 502 and 504; 2) the decode unit 540 performs the decode stage 506; 3) the rename/allocator unit 552 performs the allocation stage 508 and renaming stage 510; 4) the scheduler unit(s) 556 performs the schedule stage 512; 5) the physical register file(s) unit(s) 558 and the memory unit 570 perform the register read/memory read stage 514; the execution cluster 560 perform the execute stage 516; 6) the memory unit 570 and the physical register file(s) unit(s) 558 perform the write back/memory write stage 518; 5) various units may be involved in the exception handling stage 522; and 8) the retirement unit 554 and the physical register file(s) unit(s) 558 perform the commit stage 524.

The core 590 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 590 includes logic to support a packed data instruction set extension (e.g., AVX1, AVX2), thereby allowing the operations used by many multimedia applications to be performed using packed data.

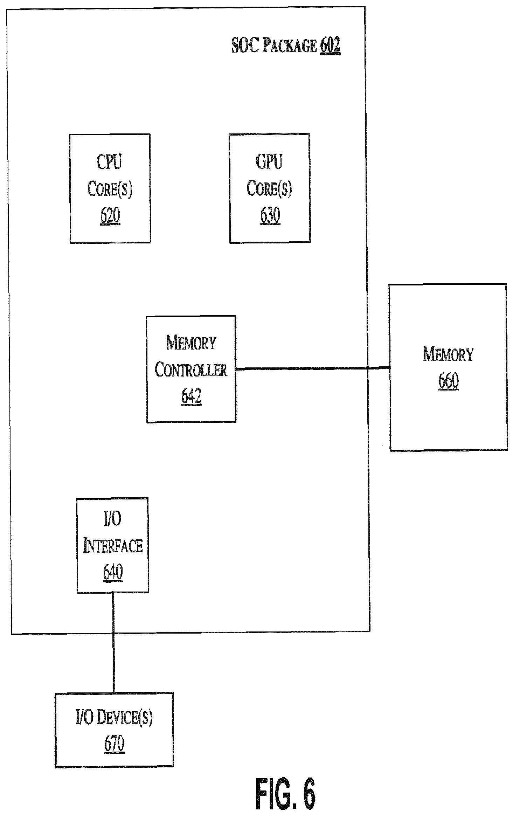

FIG. 6 illustrates a block diagram of an SOC package in accordance with an embodiment. As illustrated in FIG. 6, SOC 602 includes one or more Central Processing Unit (CPU) cores 620, one or more Graphics Processor Unit (GPU) cores 630, an Input/Output (I/O) interface 640, and a memory controller 642. Various components of the SOC package 602 may be coupled to an interconnect or bus such as discussed herein with reference to the other figures. Also, the SOC package 602 may include more or less components, such as those discussed herein with reference to the other figures. Further, each component of the SOC package 602 may include one or more other components, e.g., as discussed with reference to the other figures herein. In one embodiment, SOC package 602 (and its components) is provided on one or more Integrated Circuit (IC) die, e.g., which are packaged into a single semiconductor device.

As illustrated in FIG. 6, SOC package 602 is coupled to a memory 660 via the memory controller 642. In an embodiment, the memory 660 (or a portion of it) can be integrated on the SOC package 602.

The I/O interface 640 may be coupled to one or more I/O devices 670, e.g., via an interconnect and/or bus such as discussed herein with reference to other figures. I/O device(s) 670 may include one or more of a keyboard, a mouse, a touchpad, a display, an image/video capture device (such as a camera or camcorder/video recorder), a touch screen, a speaker, or the like.

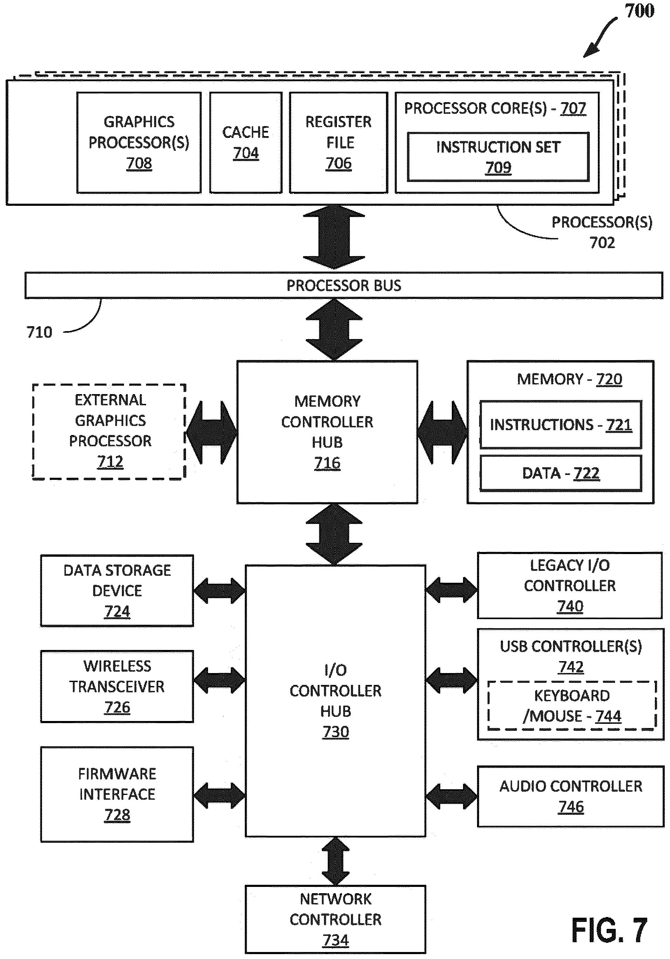

FIG. 7 is a block diagram of a processing system 700, according to an embodiment. In various embodiments the system 700 includes one or more processors 702 and one or more graphics processors 708, and may be a single processor desktop system, a multiprocessor workstation system, or a server system having a large number of processors 702 or processor cores 707. In on embodiment, the system 700 is a processing platform incorporated within a system-on-a-chip (SoC or SOC) integrated circuit for use in mobile, handheld, or embedded devices.

An embodiment of system 700 can include, or be incorporated within a server-based gaming platform, a game console, including a game and media console, a mobile gaming console, a handheld game console, or an online game console. In some embodiments system 700 is a mobile phone, smart phone, tablet computing device or mobile Internet device. Data processing system 700 can also include, couple with, or be integrated within a wearable device, such as a smart watch wearable device, smart eyewear device, augmented reality device, or virtual reality device. In some embodiments, data processing system 700 is a television or set top box device having one or more processors 702 and a graphical interface generated by one or more graphics processors 708.

In some embodiments, the one or more processors 702 each include one or more processor cores 707 to process instructions which, when executed, perform operations for system and user software. In some embodiments, each of the one or more processor cores 707 is configured to process a specific instruction set 709. In some embodiments, instruction set 709 may facilitate Complex Instruction Set Computing (CISC), Reduced Instruction Set Computing (RISC), or computing via a Very Long Instruction Word (VLIW). Multiple processor cores 707 may each process a different instruction set 709, which may include instructions to facilitate the emulation of other instruction sets. Processor core 707 may also include other processing devices, such a Digital Signal Processor (DSP).

In some embodiments, the processor 702 includes cache memory 704. Depending on the architecture, the processor 702 can have a single internal cache or multiple levels of internal cache. In some embodiments, the cache memory is shared among various components of the processor 702. In some embodiments, the processor 702 also uses an external cache (e.g., a Level-3 (L3) cache or Last Level Cache (LLC)) (not shown), which may be shared among processor cores 707 using known cache coherency techniques. A register file 706 is additionally included in processor 702 which may include different types of registers for storing different types of data (e.g., integer registers, floating point registers, status registers, and an instruction pointer register). Some registers may be general-purpose registers, while other registers may be specific to the design of the processor 702.

In some embodiments, processor 702 is coupled to a processor bus 710 to transmit communication signals such as address, data, or control signals between processor 702 and other components in system 700. In one embodiment the system 700 uses an exemplary 'hub' system architecture, including a memory controller hub 716 and an Input Output (I/O) controller hub 730. A memory controller hub 716 facilitates communication between a memory device and other components of system 700, while an I/O Controller Hub (ICH) 730 provides connections to I/O devices via a local I/O bus. In one embodiment, the logic of the memory controller hub 716 is integrated within the processor.

Memory device 720 can be a dynamic random access memory (DRAM) device, a static random access memory (SRAM) device, flash memory device, phase-change memory device, or some other memory device having suitable performance to serve as process memory. In one embodiment the memory device 720 can operate as system memory for the system 700, to store data 722 and instructions 721 for use when the one or more processors 702 executes an application or process. Memory controller hub 716 also couples with an optional external graphics processor 712, which may communicate with the one or more graphics processors 708 in processors 702 to perform graphics and media operations.

In some embodiments, ICH 730 enables peripherals to connect to memory device 720 and processor 702 via a high-speed I/O bus. The I/O peripherals include, but are not limited to, an audio controller 746, a firmware interface 728, a wireless transceiver 726 (e.g., Wi-Fi, Bluetooth), a data storage device 724 (e.g., hard disk drive, flash memory, etc.), and a legacy I/O controller 740 for coupling legacy (e.g., Personal System 2 (PS/2)) devices to the system. One or more Universal Serial Bus (USB) controllers 742 connect input devices, such as keyboard and mouse 744 combinations. A network controller 734 may also couple to ICH 730. In some embodiments, a high-performance network controller (not shown) couples to processor bus 710. It will be appreciated that the system 700 shown is exemplary and not limiting, as other types of data processing systems that are differently configured may also be used. For example, the I/O controller hub 730 may be integrated within the one or more processor 702, or the memory controller hub 716 and I/O controller hub 730 may be integrated into a discreet external graphics processor, such as the external graphics processor 712.

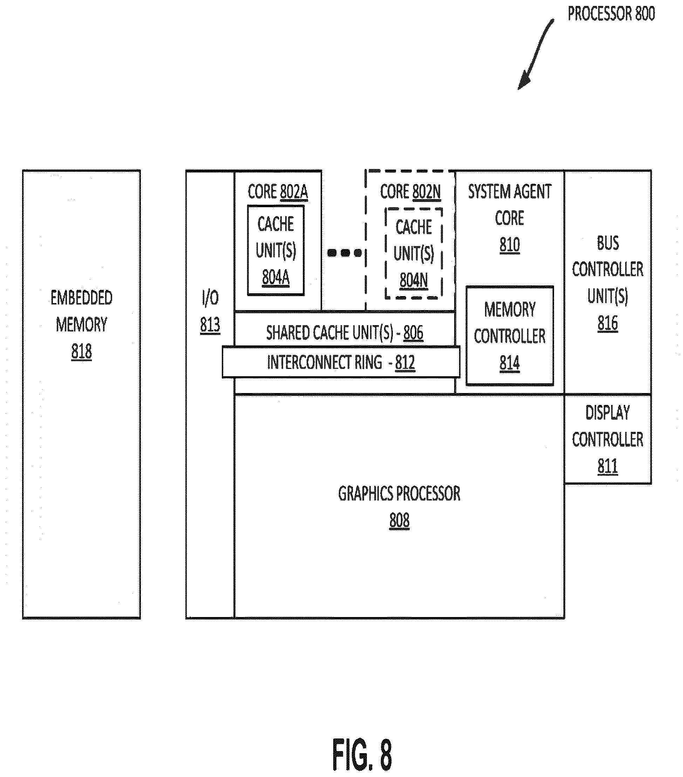

FIG. 8 is a block diagram of an embodiment of a processor 800 having one or more processor cores 802A to 802N, an integrated memory controller 814, and an integrated graphics processor 808. Those elements of FIG. 8 having the same reference numbers (or names) as the elements of any other figure herein can operate or function in any manner similar to that described elsewhere herein, but are not limited to such. Processor 800 can include additional cores up to and including additional core 802N represented by the dashed lined boxes. Each of processor cores 802A to 802N includes one or more internal cache units 804A to 804N. In some embodiments each processor core also has access to one or more shared cached units 806.

The internal cache units 804A to 804N and shared cache units 806 represent a cache memory hierarchy within the processor 800. The cache memory hierarchy may include at least one level of instruction and data cache within each processor core and one or more levels of shared mid-level cache, such as a Level 2 (L2), Level 3 (L3), Level 4 (L4), or other levels of cache, where the highest level of cache before external memory is classified as the LLC. In some embodiments, cache coherency logic maintains coherency between the various cache units 806 and 804A to 804N.

In some embodiments, processor 800 may also include a set of one or more bus controller units 816 and a system agent core 810. The one or more bus controller units 816 manage a set of peripheral buses, such as one or more Peripheral Component Interconnect buses (e.g., PCI, PCI Express). System agent core 810 provides management functionality for the various processor components. In some embodiments, system agent core 810 includes one or more integrated memory controllers 814 to manage access to various external memory devices (not shown).

In some embodiments, one or more of the processor cores 802A to 802N include support for simultaneous multi-threading. In such embodiment, the system agent core 810 includes components for coordinating and operating cores 802A to 802N during multi-threaded processing. System agent core 810 may additionally include a power control unit (PCU), which includes logic and components to regulate the power state of processor cores 802A to 802N and graphics processor 808.

In some embodiments, processor 800 additionally includes graphics processor 808 to execute graphics processing operations. In some embodiments, the graphics processor 808 couples with the set of shared cache units 806, and the system agent core 810, including the one or more integrated memory controllers 814. In some embodiments, a display controller 811 is coupled with the graphics processor 808 to drive graphics processor output to one or more coupled displays. In some embodiments, display controller 811 may be a separate module coupled with the graphics processor via at least one interconnect, or may be integrated within the graphics processor 808 or system agent core 810.

In some embodiments, a ring-based interconnect unit 812 is used to couple the internal components of the processor 800. However, an alternative interconnect unit may be used, such as a point-to-point interconnect, a switched interconnect, or other techniques, including techniques well known in the art. In some embodiments, graphics processor 808 couples with the ring interconnect 812 via an I/O link 813.

The exemplary I/O link 813 represents at least one of multiple varieties of I/O interconnects, including an on package I/O interconnect which facilitates communication between various processor components and a high-performance embedded memory module 818, such as an eDRAM (or embedded DRAM) module. In some embodiments, each of the processor cores 802 to 802N and graphics processor 808 use embedded memory modules 818 as a shared Last Level Cache.

In some embodiments, processor cores 802A to 802N are homogenous cores executing the same instruction set architecture. In another embodiment, processor cores 802A to 802N are heterogeneous in terms of instruction set architecture (ISA), where one or more of processor cores 802A to 802N execute a first instruction set, while at least one of the other cores executes a subset of the first instruction set or a different instruction set. In one embodiment processor cores 802A to 802N are heterogeneous in terms of micro architecture, where one or more cores having a relatively higher power consumption couple with one or more power cores having a lower power consumption. Additionally, processor 800 can be implemented on one or more chips or as an SoC integrated circuit having the illustrated components, in addition to other components.

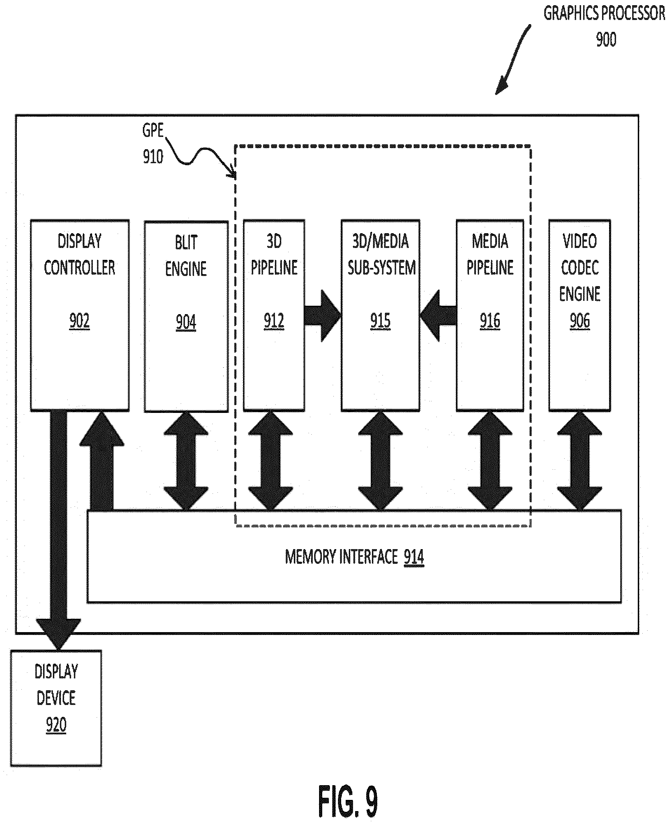

FIG. 9 is a block diagram of a graphics processor 900, which may be a discrete graphics processing unit, or may be a graphics processor integrated with a plurality of processing cores. In some embodiments, the graphics processor communicates via a memory mapped I/O interface to registers on the graphics processor and with commands placed into the processor memory. In some embodiments, graphics processor 900 includes a memory interface 914 to access memory. Memory interface 914 can be an interface to local memory, one or more internal caches, one or more shared external caches, and/or to system memory.

In some embodiments, graphics processor 900 also includes a display controller 902 to drive display output data to a display device 920. Display controller 902 includes hardware for one or more overlay planes for the display and composition of multiple layers of video or user interface elements. In some embodiments, graphics processor 900 includes a video codec engine 906 to encode, decode, or transcode media to, from, or between one or more media encoding formats, including, but not limited to Moving Picture Experts Group (MPEG) formats such as MPEG-2, Advanced Video Coding (AVC) formats such as H.264/MPEG-4 AVC, as well as the Society of Motion Picture & Television Engineers (SMPTE) 321M/VC-1, and Joint Photographic Experts Group (JPEG) formats such as JPEG, and Motion JPEG (MJPEG) formats.

In some embodiments, graphics processor 900 includes a block image transfer (BLIT) engine 904 to perform two-dimensional (2D) rasterizer operations including, for example, bit-boundary block transfers. However, in one embodiment, 3D graphics operations are performed using one or more components of graphics processing engine (GPE) 910. In some embodiments, graphics processing engine 910 is a compute engine for performing graphics operations, including three-dimensional (3D) graphics operations and media operations.

In some embodiments, GPE 910 includes a 3D pipeline 912 for performing 3D operations, such as rendering three-dimensional images and scenes using processing functions that act upon 3D primitive shapes (e.g., rectangle, triangle, etc.). The 3D pipeline 912 includes programmable and fixed function elements that perform various tasks within the element and/or spawn execution threads to a 3D/Media sub-system 915. While 3D pipeline 912 can be used to perform media operations, an embodiment of GPE 910 also includes a media pipeline 916 that is specifically used to perform media operations, such as video post-processing and image enhancement.

In some embodiments, media pipeline 916 includes fixed function or programmable logic units to perform one or more specialized media operations, such as video decode acceleration, video de-interlacing, and video encode acceleration in place of, or on behalf of video codec engine 906. In some embodiments, media pipeline 916 additionally includes a thread spawning unit to spawn threads for execution on 3D/Media sub-system 915. The spawned threads perform computations for the media operations on one or more graphics execution units included in 3D/Media sub-system 915.

In some embodiments, 3D/Media subsystem 915 includes logic for executing threads spawned by 3D pipeline 912 and media pipeline 916. In one embodiment, the pipelines send thread execution requests to 3D/Media subsystem 915, which includes thread dispatch logic for arbitrating and dispatching the various requests to available thread execution resources. The execution resources include an array of graphics execution units to process the 3D and media threads. In some embodiments, 3D/Media subsystem 915 includes one or more internal caches for thread instructions and data. In some embodiments, the subsystem also includes shared memory, including registers and addressable memory, to share data between threads and to store output data.

In this description, numerous specific details are set forth to provide a more thorough understanding. However, it will be apparent to one of skill in the art that the embodiments described herein may be practiced without one or more of these specific details. In other instances, well-known features have not been described to avoid obscuring the details of the present embodiments.

The following examples pertain to further embodiments. Example 1 includes an apparatus comprising: a processor to execute one or more software clients; and a hardware accelerator coupled to the processor, the hardware accelerator comprising an assignable interface to receive a work request with a tag from the one or more software clients; wherein the hardware accelerator is to, in response to receiving the work request, process the work request based at least in part on a configuration of the assignable interface and a value of the tag. Example 2 includes the apparatus of example 1, wherein the configuration of the assignable interface is to include a Trusted Execution Environment (TEE) mode. Example 3 includes the apparatus of example 2, wherein the tag value of the work request is to indicate whether the work request originated from a trusted software entity, wherein the trusted software entity corresponds to one of: a TEE application, a TEE driver, a TEE operating system, a TEE container, a TEE virtual machine, or a TEE security manager. Example 4 includes the apparatus of example 3, wherein the hardware accelerator is to reject the work request based at least in part on a determination that the TEE mode is disabled for the assignable interface. Example 5 includes the apparatus of example 1, wherein the hardware accelerator is to support a state machine for management of the assignable interface. Example 6 includes the apparatus of example 5, wherein the state machine is to transition between one or more states selected from a group comprising: interface disabled, interface configured, interface enabled, and interface halted. Example 7 includes the apparatus of example 6, wherein a transition to the interface configured state is to cause locking of the configuration of the assignable interface and performance of one or more consistency-related checks. Example 8 includes the apparatus of example 6, wherein the hardware accelerator is to reject the work request in response to a determination that a state of the assignable interface is different from the interface enabled state. Example 9 includes the apparatus of example 5, wherein the state machine is to transition between one or more states based on a command from a group comprising: lock interface, enable interface, disable interface, and reset interface. Example 10 includes the apparatus of example 1, wherein a configuration interface of the accelerator is to receive a command from the one or more software entities with the tag. Example 11 includes the apparatus of example 10, wherein the tag value of the command is to indicate whether the work request originated from a trusted software entity or an untrusted software entity, wherein the trusted software entity comprises one of: a TEE application, a TEE driver, a TEE operating system, a TEE container, a TEE virtual machine, and a TEE security manager, and wherein the untrusted software entity comprises one of: an application, a driver, an operating system, a container, a virtual machine, or a virtual machine monitor. Example 12 includes the apparatus of example 10, wherein the hardware accelerator is to reject the command in response to a determination that a TEE mode is enabled and the software entity is an untrusted software entity.

Example 13 includes the apparatus of example 1, wherein the one or more software entities comprise one of: an application, a driver, an operating system, a container, a virtual machine, a virtual machine monitor, a TEE application, a TEE driver, a TEE operating system, a TEE container, a TEE virtual machine, and a TEE security manager. Example 14 includes the apparatus of example 1, wherein the assignable interface comprises one of: a dedicated work queue, a shared work queue, a transmission/reception (Tx/Rx) queue, or a command queue. Example 15 includes the apparatus of example 1, wherein the hardware accelerator is a Data Streaming Accelerator (DSA), an In-Memory Analytics Accelerator (IAA), or a QuickAssist Technology Accelerator (QAT). Example 16 includes the apparatus of example 1, wherein the assignable interface comprises one of: a Peripheral Component Interconnect express (PCIe) or a Compute Express Link (CXL) physical function, a PCIe/CXL Single Root Input/Output Virtualization (SR-IOV) virtual function, and a Scalable Input/Output (I/O) Virtualization Assignable Device Interface (Scalable IOV ADI). Example 17 includes the apparatus of example 1, wherein the hardware accelerator is to tag a Direct Memory Access (DMA) request based at least in part on the tag value of the work request. Example 18 includes the apparatus of example 1, wherein the tag comprises a single bit. Example 19 includes the apparatus of example 1, wherein the hardware accelerator is to support one or more: data movement or data transformation operations. Example 20 includes the apparatus of example 19, wherein the one or more data movement or data transformation operations comprise one or more of: a memory move operation, a Cyclic Redundancy Code (CRC) operation, a Data Integrity Field (DIF) operation, a dual-cast operation, a memory fill operation, a memory compare operation, a delta record create or merge operation, a pattern detect operation, a cache flush operation, a scatter-gather operation, a data reduction operation, a memory compression or decompression operation, a scan operation, a filter operation, a select operation, a data compression or decompression operation, one or more cryptographic operations, and one or more public-key exchange operations.

Example 21 includes an apparatus comprising: security manager circuitry to provide an interface to a host entity to cause assignment of a resource to a trusted entity based at least in part on a value of a tag; and work queue configuration circuitry to configure one or more work queues of a hardware accelerator. Example 22 includes the apparatus of example 21, wherein the work queue configuration logic circuitry is to support a state machine for management of the one or more work queues, wherein the state machine is to transition between one or more states selected from a group comprising: work queue disabled, work queue configured, work queue enabled, and work queue halted. Example 23 includes the apparatus of example 21, wherein the host entity is untrusted. Example 24 includes the apparatus of example 21, wherein the host entity comprises one of: a Virtual Machine Monitor (VMM), an Operating System, and a driver. Example 25 includes the apparatus of example 21, wherein the trusted entity comprises a Trusted Execution Environment (TEE) Virtual Machine (TVM). Example 26 includes the apparatus of example 21, wherein the hardware accelerator is a Data Streaming Accelerator (DSA). Example 27 includes the apparatus of example 26, wherein the DSA is to support one or more data movement and data transformation operations. Example 28 includes the apparatus of example 27, wherein the one or more data movement and data transformation operations comprise: a memory move operation, Cyclic Redundancy Code (CRC) operation, a Data Integrity Field (DIF) operation, a dual-cast operation, a memory fill operation, a memory compare operation, a delta record create or merge operation, a pattern detect operation, a cache flush operation, a scatter-gather operation, and a data reduction operation.

Example 29 includes the apparatus of example 21, wherein the hardware accelerator is an In-Memory Analytics Accelerator (IAA). Example 30 includes the apparatus of example 29, wherein the IAA is to support memory compression or memory decompression. Example 31 includes the apparatus of example 29, wherein the IAA is to support one or more analytics operations. Example 32 includes the apparatus of example 31, wherein the one or more analytics operations comprise: a scan operation, a filter operation, and a select operation. Example 33 includes the apparatus of example 21, wherein the hardware accelerator is a QuickAssist Technology Accelerator (QAT). Example 34 includes the apparatus of example 33, wherein the QAT is to support one or more of: data compression or decompression, one or more cryptographic operations, and/or one or more public-key exchange operations. Example 35 includes the apparatus of example 34, wherein the one or more cryptographic operations comprise one or more data encryption or data decryption operations. Example 36 includes the apparatus of example 21, wherein device security manager logic circuitry is to authenticate the resource. Example 37 includes the apparatus of example 36, wherein the hardware accelerator comprises the device security manager logic circuitry. Example 38 includes the apparatus of example 21, wherein the hardware accelerator is scalable. Example 39 includes the apparatus of example 21, wherein a processor, having one or more processor cores, comprises the security manager logic circuitry. Example 40 includes the apparatus of example 21, wherein the hardware accelerator is one of: a DSA, an IAA, a QAT, a Graphics Processing Unit (GPU), a processor or Central Processing Unit (CPU), or a Field-Programmable Gate Array (FPGA).

Example 41 includes a method comprising: executing, at a processor, one or more software clients; and receiving, at an assignable interface of a hardware accelerator a work request with a tag from the one or more software clients; wherein the hardware accelerator, in response to receiving the work request, processes the work request based at least in part on a configuration of the assignable interface and a value of the tag. Example 42 includes the method of example 41, wherein the configuration of the assignable interface is to include a Trusted Execution Environment (TEE) mode. Example 43 includes the method of example 42, further comprising the tag value of the work request indicating whether the work request originated from a trusted software entity. Example 44 includes the method of example 43, wherein the trusted software entity corresponds to one of: a TEE application, a TEE driver, a TEE operating system, a TEE container, a TEE virtual machine, or a TEE security manager. Example 45 includes the method of example 43, further comprising the hardware accelerator rejecting the work request based at least in part on a determination that the TEE mode is disabled for the assignable interface. Example 46 includes the method of example 41, further comprising the hardware accelerator supporting a state machine for management of the assignable interface.

Example 47 includes a method comprising: providing, at security manager circuitry, an interface to a host entity to cause assignment of a resource to a trusted entity based at least in part on a value of a tag; and configuring, at work queue configuration circuitry, one or more work queues of a hardware accelerator. Example 48 includes the method of example 47, further comprising the work queue configuration logic circuitry supporting a state machine for management of the one or more work queues, wherein the state machine transitions between one or more states selected from a group comprising: work queue disabled, work queue configured, work queue enabled, and work queue halted. Example 49 includes the method of example 47, wherein the host entity is untrusted. Example 50 includes the method of example 47, wherein the host entity comprises one of: a Virtual Machine Monitor (VMM), an Operating System, and a driver. Example 51 includes the method of example 47, wherein the trusted entity comprises a Trusted Execution Environment (TEE) Virtual Machine (TVM). Example 52 includes the method of example 47, wherein the hardware accelerator is a Data Streaming Accelerator (DSA).

Example 53 includes an apparatus comprising means to perform a method as set forth in any preceding example. Example 54 includes machine-readable storage including machine-readable instructions, when executed, to implement a method or realize an apparatus as set forth in any preceding example. Example 54 includes the apparatus of example 6, wherein the state machine is to transition to interface halted state based on an event from a group comprising: configuration change, interface reset, and interface error.

In various embodiments, one or more operations discussed with reference to Figs. 1 et seq. may be performed by one or more components (interchangeably referred to herein as "logic") discussed with reference to any of the figures.

In some embodiments, the operations discussed herein, e.g., with reference to Figs. 1 et seq., may be implemented as hardware (e.g., logic circuitry), software, firmware, or combinations thereof, which may be provided as a computer program product, e.g., including one or more tangible (e.g., non-transitory) machine-readable or computer-readable media having stored thereon instructions (or software procedures) used to program a computer to perform a process discussed herein. The machine-readable medium may include a storage device such as those discussed with respect to the figures.

Additionally, such computer-readable media may be downloaded as a computer program product, wherein the program may be transferred from a remote computer (e.g., a server) to a requesting computer (e.g., a client) by way of data signals provided in a carrier wave or other propagation medium via a communication link (e.g., a bus, a modem, or a network connection).

Reference in the specification to "one embodiment" or "an embodiment" means that a particular feature, structure, and/or characteristic described in connection with the embodiment may be included in at least an implementation. The appearances of the phrase "in one embodiment" in various places in the specification may or may not be all referring to the same embodiment.

Also, in the description and claims, the terms "coupled" and "connected," along with their derivatives, may be used. In some embodiments, "connected" may be used to indicate that two or more elements are in direct physical or electrical contact with each other. "Coupled" may mean that two or more elements are in direct physical or electrical contact. However, "coupled" may also mean that two or more elements may not be in direct contact with each other, but may still cooperate or interact with each other.

Thus, although embodiments have been described in language specific to structural features and/or methodological acts, it is to be understood that claimed subject matter may not be limited to the specific features or acts described. Rather, the specific features and acts are disclosed as sample forms of implementing the claimed subject matter.

## Claims

1. An apparatus comprising:
a processor to execute one or more software clients; and
a hardware accelerator coupled to the processor, the hardware accelerator comprising an assignable interface to receive a work request with a tag from the one or more software clients;
wherein the hardware accelerator is to, in response to receiving the work request, process the work request based at least in part on a configuration of the assignable interface and a value of the tag.

2. The apparatus of claim 1, wherein the configuration of the assignable interface is to include a Trusted Execution Environment (TEE) mode, or wherein the tag value of the work request is to indicate whether the work request originated from a trusted software entity, wherein the trusted software entity corresponds to one of: a TEE application, a TEE driver, a TEE operating system, a TEE container, a TEE virtual machine, or a TEE security manager, or wherein the hardware accelerator is to reject the work request based at least in part on a determination that the TEE mode is disabled for the assignable interface.

3. The apparatus of claim 1, wherein the hardware accelerator is to support a state machine for management of the assignable interface, or wherein the state machine is to transition between one or more states selected from a group comprising: interface disabled, interface configured, interface enabled, and interface halted, or wherein a transition to the interface configured state is to cause locking of the configuration of the assignable interface and performance of one or more consistency-related checks, or wherein the hardware accelerator is to reject the work request in response to a determination that a state of the assignable interface is different from the interface enabled state, or wherein the state machine is to transition to interface halted state based on an event from a group comprising: configuration change, interface reset, and interface error, or wherein the state machine is to transition between one or more states based on a command from a group comprising: lock interface, enable interface, disable interface, and reset interface.

4. The apparatus of claim 1, wherein a configuration interface of the accelerator is to receive a command from the one or more software entities with the tag, or wherein the tag value of the command is to indicate whether the work request originated from a trusted software entity or an untrusted software entity, wherein the trusted software entity comprises one of: a TEE application, a TEE driver, a TEE operating system, a TEE container, a TEE virtual machine, and a TEE security manager, and wherein the untrusted software entity comprises one of: an application, a driver, an operating system, a container, a virtual machine, or a virtual machine monitor, or wherein the hardware accelerator is to reject the command in response to a determination that a TEE mode is enabled and the software entity is an untrusted software entity.

5. The apparatus of claim 1, wherein the one or more software entities comprise one of: an application, a driver, an operating system, a container, a virtual machine, a virtual machine monitor, a TEE application, a TEE driver, a TEE operating system, a TEE container, a TEE virtual machine, and a TEE security manager.

6. The apparatus of claim 1, wherein the assignable interface comprises one of: a dedicated work queue, a shared work queue, a transmission/reception (Tx/Rx) queue, or a command queue.

7. The apparatus of claim 1, wherein the assignable interface comprises one of: a Peripheral Component Interconnect express (PCIe) or a Compute Express Link (CXL) physical function, a PCIe/CXL Single Root Input/Output Virtualization (SR-IOV) virtual function, and a Scalable Input/Output (I/O) Virtualization Assignable Device Interface (Scalable IOV ADI).

8. The apparatus of claim 1, wherein the hardware accelerator is to tag a Direct Memory Access (DMA) request based at least in part on the tag value of the work request.

9. The apparatus of claim 1, wherein the tag comprises a single bit.

10. The apparatus of claim 1, wherein the hardware accelerator is to support one or more: data movement or data transformation operations, or wherein the one or more data movement or data transformation operations comprise one or more of: a memory move operation, a Cyclic Redundancy Code (CRC) operation, a Data Integrity Field (DIF) operation, a dual-cast operation, a memory fill operation, a memory compare operation, a delta record create or merge operation, a pattern detect operation, a cache flush operation, a scatter-gather operation, a data reduction operation, a memory compression or decompression operation, a scan operation, a filter operation, a select operation, a data compression or decompression operation, one or more cryptographic operations, and one or more public-key exchange operations.

11. An apparatus comprising:
security manager circuitry to provide an interface to a host entity to cause assignment of a resource to a trusted entity based at least in part on a value of a tag; and
work queue configuration circuitry to configure one or more work queues of a hardware accelerator.

12. The apparatus of claim 11, wherein the work queue configuration logic circuitry is to support a state machine for management of the one or more work queues, or wherein the state machine is to transition between one or more states selected from a group comprising: work queue disabled, work queue configured, work queue enabled, and work queue halted.

13. The apparatus of claim 11, wherein the host entity is untrusted, or wherein the trusted entity comprises a Trusted Execution Environment (TEE) Virtual Machine (TVM).

14. An apparatus comprising means to perform a method as set forth in any preceding claim.

15. Machine-readable storage including machine-readable instructions, when executed, to implement a method or realize an apparatus as set forth in any preceding claim.
